# EUROPEAN PATENT APPLICATION

(11) **EP 4 814 422 A1**
(43) Date of publication of application: **30.09.2026**
(21) Application number: 25166675.6
(22) Date of filing: 27.03.2025
(51) Int. Cl.: F25J 3/02, B01D 53/02, F01D 15/00, F04D 25/02, F25J 3/06

(54) **METHOD FOR PROCESSING GAS OF A CARBON DIOXIDE CAPTURE PROCESS USING A TURBO MACHINE AND CORRESPONDING PLANT**

(71) Applicant: Linde GmbH, 82049 Pullach (DE)
(72) Inventor: Oeder, Gabriele, 82049 Pullach (DE); Keller, Tobias, 82049 Pullach (DE)
(74) Representative: Lu, Jing

(57) **Abstract**

The invention relates to method for processing gas streams of a carbon dioxide capture process, using a turbo machine (200a), wherein the turbo machine comprises: a single-shaft compressor (210a), an expander (220a), and an electric machine (230a) having a rotor with a rotor shaft, wherein the compressor (210a) is used to compress an input gas stream for further use, in particular for the carbon dioxide capture, wherein the expander (220a) is used to expand a carbon dioxide depleted gas stream, wherein the compressor (210a) is rotationally coupled to the rotor shaft (233a, 233b) of the electric machine, and wherein the expander (220a, 220b) is rotationally coupled to the compressor (210a) by means of an overrunning clutch (240).

## Description

The present invention relates to a method for processing gas streams of a carbon dioxide capture process, using a turbo machine, the turbo machine having a single-shaft compressor, an expander and an electric machine, and to a plant configured for a carbon dioxide capture process comprising such turbo machine.

### Background

Carbon Capture and Storage (CCS) is a technology designed to reduce carbon dioxide (CO₂) emissions from industrial sources, preventing them from entering the atmosphere and contributing to climate change. It involves capturing carbon dioxide emissions from power plants and industrial processes, transporting the captured carbon dioxide, and storing it underground in geological formations. Sources of the carbon dioxide can include various processes such as hydrogen production.

The carbon dioxide capture process included therein requires compressing the carbon dioxide for further use, in particular the carbon dioxide capture and, e.g., also for storage. Turbo machines comprising a compressor can be used for such compression of the carbon dioxide. Typical turbo machines can comprise various stages of compression, e.g. integrally geared compressors or multistage single-shaft centrifugal compressors; this involves some sort of transmission, gear boxes and/or multiple rotating shafts and the like. Furthermore, an expander can be used to expand gas in the process, e.g., to recover energy.

It has turned out that such turbo machines can be complex and might not be able to cover large operating ranges. It is therefore an object of the present invention to provide an improved way of using a compressor and an expander in carbon dioxide capturing processes, in particular improve energy efficiency

### Disclosure of the invention

This object is achieved by providing a method for processing gas streams of a carbon dioxide capture process using a turbo machine and a plant for a carbon dioxide capturing process comprising such a turbo machine with the features of the independent claims. Embodiments of the invention are the subject of the dependent claims and of the description that follows.

The invention relates to turbo machines and their use in carbon dioxide capture processes and corresponding plants. In carbon capture processes, carbon dioxide is typically removed from a provided gas stream, at least partially; this can be done by means of pressure swing adsorption (PSA), for example. Alternative carbon capture applications are, for example, Hot Potassium Carbonate (HPC) wash units, amine based wash units or membrane carbon capture units. This results in a carbon dioxide enriched gas stream and a carbon dioxide depleted stream (typically called vent gas). The carbon dioxide enriched gas is to be stored, for example. The initially provided input gas stream (typically called flue gas) can be received from a preceding process like hydrogen production or the like.

As mentioned earlier, such carbon dioxide capture can be a part of Carbon Capture and Storage (CCS), which is a technology designed to reduce carbon dioxide emissions from industrial sources, preventing them from entering the atmosphere and contributing to climate change. Carbon dioxide can be captured from processes like combustion of fossil fuels, oxy-fuel combustion and chemicals production. Other processes are process heating, power generation, waste to energy application, cement, glass, paper and steel production. In particular for climate change efforts, hydrogen production is an important process.

The turbo machine used therein comprises a single-shaft compressor, an expander, and an electric machine having a rotor with a shaft. The single-shaft compressor can comprise a compressor shaft and one or more compressor impellers mounted on this shaft. In particular, the single-shaft compressor is a single-shaft centrifugal compressor. Similarly, the expander can comprise an expander shaft and an expander impeller mounted on this shaft.

The compressor is used to compress an input gas stream for further use, in particular the carbon dioxide capture. For the carbon dioxide capture, the carbon dioxide enriched gas stream can be obtained and provided, e.g., for storage. The expander is used to expand the carbon dioxide depleted gas stream. This allows to recover energy from the carbon dioxide depleted gas, and/or to at least partially drive the compressor.

The compressor is rotationally coupled to the rotor shaft of the electric machine, i.e. the rotor shaft and the shaft of the compressor are coupled to each other such that torque can be transmitted from the electric machine to the compressor or vice versa. Such coupling can comprise a hollow shaft mounted over and fixed to both, the rotor shaft and the compressor shaft. Such type of coupling can also be referred to as a direct coupling.

The expander is rotationally coupled to the compressor by means of an overrunning clutch. An overrunning clutch, also called one-way-clutch, is a mechanical device that allows rotation in one direction while preventing motion in the opposite direction. The overrunning clutch engages and transmits torque when the driving component rotates faster than the driven component. When the driven component starts moving faster than the driver, the clutch disengages and allows it to "overrun" freely. Note that the expander can be rotationally coupled to the compressor, by means of the overrunning clutch, directly or indirectly, as will be explained in more detail below.

There are different types of overrunning clutches. The sprag clutch uses sprags (small wedge-shaped elements) positioned between inner and outer races. When rotation occurs in the drive direction, sprags tilt and lock, transmitting torque. When rotation is reversed, sprags roll freely, allowing freewheeling. Another type is the roller ramp clutch, which uses rollers positioned on ramps inside the clutch. When torque is applied in the drive direction, the rollers move up the ramps and lock. When overrun occurs, the rollers move back down, allowing free rotation. Another type is the ratchet and pawl clutch, which uses a ratchet wheel and pawl. The pawl engages with the ratchet teeth to allow movement in one direction. It automatically disengages when movement occurs in the opposite direction.

Since the effect of all types of overrunning clutches is the same, the specific type used in the turbo machine is of less importance. The ratchet and pawl clutch type, however, allows a high mechanical wear resistance and allows high rotational speeds and high load what provides advantages for the use in the turbo machine.

Using such overrunning clutch in the turbo machine results in that torque is transmitted between the expander and the compressor only in one rotational direction. In particular, the overrunning clutch is arranged such that it engages and transmits torque when the expander as driving component rotates faster than the compressor as driven component. When the compressor driven component starts moving faster than the driver, the clutch disengages and allows it to "overrun" freely. In other words, the overrunning clutch is arranged such that a compressor side of the overrunning clutch can rotate faster than an expander side of the overrunning clutch.

In this way, the expander can be coupled to the compressor, even without using a transmission or gear system or other complex systems, in order to make use of the expander to recover energy from the carbon dioxide depleted stream (vent gas). No two stand-alone machines (compressor and expander) are required. Moreover, the overrunning clutch allows disengaging the expander and the compressor for certain operating states like start-up of a plant and/or the carbon dioxide capture process. In particular, during start-up, carbon dioxide enriched gas has to be compressed. There is, however, no carbon dioxide depleted (vent gas) stream. If the expander was running it this state, this would result in unallowed operating states for the expander; this in turn could result in damages of the expander and the entire turbo machine.

Using (integrally) geared compressors (having a gear and multiple pinion shafts) would allow coupling the expander to one of the pinion shafts. The use of the overrunning clutch now allows having a single-shaft compressor, which cannot directly be coupled to an expander.

In an embodiment, the rotor shaft of the electric machine extends to two sides of the electric machine. The compressor is rotationally coupled to the rotor shaft at a first one of the two sides of the electric machine, and the expander is rotationally coupled to the rotor shaft at a second one of the two sides of the electric machine by means of the overrunning clutch. In this case, the expander is rotationally coupled to the compressor, by means of the overrunning clutch, indirectly because the rotor shaft is arranged in-between. Due to the coupling between the rotor shaft and the compressor, the effected of the overrunning clutch generated between the compressor and the expander is, however, not affected. Arranging the electric machine between compressor and expander allows a compact arrangement.-

In another embodiment, the compressor shaft extends to two sides of the compressor, and the expander is coupled to the compressor by means of the overrunning clutch. In this case, the expander is directly coupled to the compressor, by means of the overrunning clutch. Arranging the electric machine an end position, allows the electric machine to be manufactured with the shaft extending to only one end.

The invention also relates to the use of a turbomachine in a carbon dioxide capture process, wherein the turbo machine comprises: a single-shaft compressor, an expander, and an electric machine having a rotor with a rotor shaft. The compressor is rotationally coupled to the rotor shaft of the electric machine, and the expander is rotationally coupled to the compressor by means of an overrunning clutch. In particular, the compressor is used to compress an input gas stream for further use, in particular the carbon dioxide capture, and the expander is used to expand a carbon dioxide depleted gas stream.

The invention also relates to a plant for carbon dioxide capture, configured to provide a carbon dioxide enriched gas stream and a carbon dioxide depleted gas stream. The plant comprises a turbomachine, wherein the turbo machine comprises: a single-shaft compressor, an expander, and an electric machine having a rotor with a rotor shaft. The plant is configured to compress an input gas stream by means of the compressor for further use, in particular the carbon dioxide capture, and to expand the carbon dioxide depleted gas stream by means of the expander. The compressor is rotationally coupled to the rotor shaft of the electric machine, and the expander is rotationally coupled to the compressor by means of an overrunning clutch.

For further embodiments and explanations and advantages of the use and the plant, it is referred to above explanations provided for the method which apply here correspondingly.

Further advantages and embodiments of the invention will be apparent from the description and the accompanying drawing. The invention is illustrated schematically by means of embodiments in the drawing and is described below with reference to the drawing.

### Brief description of the figures

- Fig. 1: illustrates a typical carbon dioxide capture process for illustrating a method according to an embodiment;
- Fig. 2a: illustrates a turbo machine according to an embodiment, and
- Fig. 2b: illustrates a turbo machine according to another embodiment.

### Detailed description of the figures

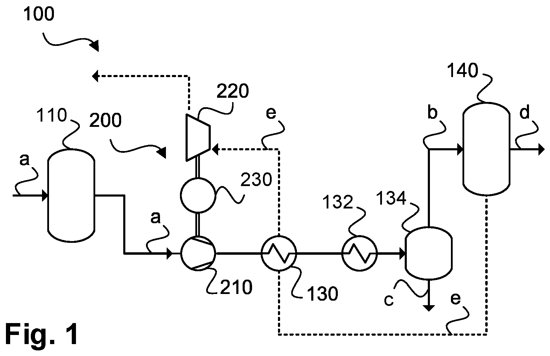

Fig. 1 schematically illustrates a typical carbon dioxide capture process in a process flow diagram, for illustrating a method according to an embodiment. The method can be performed by means of a plant 100. The plant and the method will be described together in the following.

The plant 100 comprises a cooler 110, e.g., a direct-contact cooler, illustrated only schematically. By means of the cooler 110, a flue gas stream a can be cooled (e.g. using cooling water) and then - as input gas stream a - be supplied.

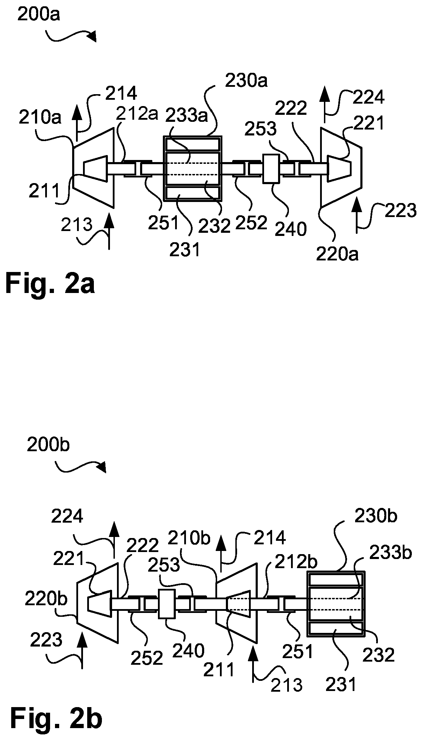

The plant 100 further comprises a turbo machine 200 which comprises a single-shaft compressor 210, an expander 220, and an electric machine 230. The turbo machine 200 is illustrated purely schematically only, and will be shown in more detail in Fig. 2a. The flue gas stream, after having been cooled is then supplied - as input gas stream a - to the compressor 210 and compressed, e.g., from 1 bara to 4 or 5 bara or the like; depending on the specific kind of carbon capture process, this can also be up to 15 bara, for example. The input gas stream a is heated due to compression, e.g., from about 50°C to about 150°C, and then fed to a heat exchanger 130 of the plant 100. In the heat exchanger 130, the input gas stream a is cooled down and optionally fed to an after cooler 132 to further cool down.

The input gas stream a is then fed to a water separator 134 to separate water c from the input gas stream a. After separation of water, the dry input gas stream, now called stream b, is provided to carbon dioxide capture.

The plant 100 comprises a pressure swing adsorption, PSA, apparatus 140 which is supplied with the input gas stream b, from which carbon dioxide is to be removed, i.e. a carbon dioxide capture process is to be performed. For example, the input gas stream b (or stream a) can result from hydrogen production. The carbon capture process performed by means of pressure swing adsorption, results in a carbon dioxide enriched gas stream d, and a carbon dioxide depleted stream e, so-called vent gas. It is noted that a pressure swing adsorption apparatus typically comprises multiple vessels operated in alternate manner. The specific way of how the PSA apparatus is operated is, however, of no particular importance for the present invention. Furthermore, the PSA described in Fig. 1 is an example of how to perform carbon dioxide capture; as mentioned earlier, other means or units can be used for carbon dioxide capture.

The input gas (stream a or b) can comprise an amount of carbon dioxide between 10% and 30% (molar fraction), for example. Other components can be nitrogen (e.g., between 50% and 80%) and oxygen (e.g., between 5% and 15%) and water or water vapor (e.g., between 2% and 15%). Other components can also be present but typically in amounts of much less than 1%.

The carbon dioxide depleted gas can comprise an amount of carbon dioxide below 2% or even below 1% (molar fraction), for example. Other components can be nitrogen (e.g., between 70% and 95%) and oxygen (e.g., between 5% and 20%). Other components can also be present but typically in amounts of much less than 1%.

It is noted that these values for input gas and carbon dioxide depleted gas are specific examples which can occur in typical applications and are for explanation purposes only.

The carbon dioxide depleted gas stream e is fed to the heat exchanger 130 where it is used as cooling medium, in order to cool down the input gas stream a. After the heat exchanger 130, the carbon dioxide depleted gas stream can be provided to the expander 220. The carbon dioxide depleted gas stream e is cooled due to expansion, e.g., from about 130°C to about 40°C, with a pressure drop from, e.g., about 3 or 4 bara down to about 1 bara (or, depending on the specific carbon dioxide capture process, also from 15 bara). The carbon dioxide depleted gas (vent gas) can be processed as required, e.g., vented to air.

Fig. 2a schematically illustrates a turbo machine 200a according to an embodiment. The turbo machine 200a can correspond to the turbo machine 200 shown in Fig. 1, but is shown in more detail, albeit still schematically. The turbo machine 200a comprises a compressor 210a, an expander 220a and an electric machine 230a.

The compressor 210a comprises a compressor wheels (or impellers) 211, which are mounted on a compressor shaft 212a of the compressor 210a. Furthermore, the compressor 210a comprises an inlet channel (or nozzle) 213 and an outlet channel (or nozzle) 214; the channels are used for the carbon dioxide enriched gas stream to be compressed (see flow directions indicated by arrows, which also indicated the channels).

The expander 220a comprises an expander wheel (or impeller) 221, which is mounted on an expander shaft 222 of the expander 220a. Furthermore, the expander 220a comprises an inlet channel (or nozzle) 223 and an outlet channel (or nozzle) 224; the channels are used for the carbon dioxide depleted gas stream to be expanded (see flow directions indicated by arrows, which also indicated the channels).

The electric machine 230a comprises a stator 231 and a rotor 232, which is mounted on a rotor shaft 233a of the electric machine 230a. The rotor shaft is support in the electric machine 230a or a housing thereof, e.g., by means of bearings, such that the rotor can be rotated. In particular, the electric machine 230a can be operated as a motor in order to generate torque provided via the rotor shaft 233a. It is noted that the rotor shaft 233a extends to two sides of the electric machine 230a, i.e. to the left end and the right end according to Fig. 2a.

The compressor 210a is rotationally coupled to the rotor shaft 233a of the electric machine 230a. In particular, the compressor shaft 212a of the compressor 210a is coupled to the rotor shaft 233a at one side of the electric machine. This coupling is done by means of a hollow shaft 251 which is mounted over both shafts at their neighbouring ends, for example. In this way, any rotation of the rotor shaft 233a is directly transmitted to the compressor 210a. Note that apart from such direct coupling, a gear box can be used in order to couple the compressor or its shaft 212a to the electric machine or its rotor shaft 233a if required.

The expander 220a is rotationally coupled to the rotor shaft 233a at the second side of the electric machine 230a by means of an overrunning clutch 240. This comprises that the expander 220a, in particular its expander shaft 222, is rotationally coupled to the overrunning clutch 240 or a shaft of it, and that the rotor shaft 233a at the second side of the electric machine 230a is rotationally coupled to the overrunning clutch 240 or a shaft of it. Note that the rotor shaft 233a and the expander shaft 222 are coupled to the overrunning clutch 240 on opposing ends of the overrunning clutch 240. Each of these two couplings is done by means of a hollow shaft 252 and 253, respectively, each of which is mounted over both shafts at their neighbouring ends which are to be coupled, for example.

The overrunning clutch 240 is arranged such that it engages and transmits torque when the expander 220a as driving component rotates faster than the compressor 210a as driven component. This means that the expander 220a, when expanding gas and rotating, can drive the compressor 210a. Note that this is in addition to the electric machine 230a driving the compressor 210a. This allows recovering of energy from the expansion of the carbon dioxide depleted gas stream, resulting in less energy consumption and less wear of the electric machine 230a.

In addition, the overrunning clutch allows to dis-engage or decouple the expander 220a from the compressor 210a (and the electric machine 230a). For example, during start-up of the plant (see Fig. 1) there is only carbon dioxide enriched gas to be compressed by the compressor 210a, however, there is no (or not yet or not yet sufficient) carbon dioxide depleted gas stream to expand. In this case, the compressor rotates faster than the expander (which might not rotate at all or only slowly).

Fig. 2b schematically illustrates a turbo machine 200b according to another embodiment. The turbo machine 200b can also be used in the plant 100 shown in Fig. 1, e.g., instead of the turbo machine 200. The turbo machine 200b comprises a compressor 210b, an expander 220b and an electric machine 230b. These components are basically similar to those of turbo machine 200a, except for some details which will be explained below. A main difference between turbo machine 200b and turbo machine 200a is the arrangement of the compressor, expander and electric machine with respect to one another. Components which are identical to those of turbo machine 200a are referred to with the same reference numeral, and will not be explained again.

The compressor wheels (or impellers) 211 of compressor 210b mounted on a compressor shaft 212b of the compressor 210b. The compressor shaft 212b extends to two sides of the compressor 210b (or its housing).

The expander 220b corresponds to expander 220a, the only difference is the mirrored arrangement. The electric machine 230b comprises a rotor shaft 233b, which extends to one side of the electric machine 230b only.

The compressor 210b is rotationally coupled, via its compressor shaft 212b on a first side, to the rotor shaft 233b of the electric machine 230b just like for turbo machine 200a.The expander 220b is rotationally coupled to the compressor shaft 212b at the second side by means of the overrunning clutch 240, using hollow shafts 252 and 253.

The overrunning clutch 240 is arranged such that it engages and transmits torque when the expander 220b as driving component rotates faster than the compressor 210b as driven component. The functionality of the turbo machine 200b is the same as that of turbo machine 200a.

## Claims

1. A method for processing gas streams of a carbon dioxide capture process, using a turbo machine (200, 200a, 200b), wherein the turbo machine comprises: a single-shaft compressor (210, 210a, 210b), an expander (220, 220a, 220b), and an electric machine (230, 230a, 230b) having a rotor with a rotor shaft,
wherein the compressor (210, 210a, 210b) is used to compress an input gas stream (b) for further use, in particular for the carbon dioxide capture,
wherein the expander (220, 220a, 220b) is used to expand a carbon dioxide depleted gas stream (e),
wherein the compressor (210a, 210b) is rotationally coupled to the rotor shaft (233a, 233b) of the electric machine, and
wherein the expander (220a, 220b) is rotationally coupled to the compressor (210a, 210b) by means of an overrunning clutch (240).

2. The method of claim 1, wherein the overrunning clutch (240) is arranged such that it engages and transmits torque when the expander as driving component rotates faster than the compressor as driven component.

3. The method of claim 1 or 2, wherein the expander (220, 220a, 220b) is used to recover energy from the carbon dioxide depleted stream and/or to at least partially drive the compressor.

4. The method of any one of the preceding claims, wherein the rotor shaft (233a) of the electric machine extends to two sides of the electric machine,
wherein the compressor (210a) is rotationally coupled to the rotor shaft at a first one of the two sides of the electric machine, and
wherein the expander (220a) is rotationally coupled to the rotor shaft at a second one of the two sides of the electric machine by means of the overrunning clutch (240).

5. The method of any one of claims 1 to 3, wherein the compressor (220b) comprises a compressor shaft, on which a compressor impeller is mounted, wherein the compressor shaft extends to two sides of the compressor,
wherein the expander (220b) is coupled to the compressor by means of the overrunning clutch (240).

6. The method of any one of the preceding claims, wherein the compressor is directly coupled to the shaft of the electric machine.

7. The method of any one of the preceding claims, wherein the input gas stream is received as flue gas and, after compression, provided to the carbon capture process, and wherein the carbon dioxide depleted stream is received as vent gas from the carbon capture process.

8. The method of claim 7, wherein the carbon capture process is performed by means of pressure swing adsorption, PSA, a Hot Potassium Carbonate, HPC, wash unit, an amine based wash unit, or a membrane carbon capture unit.

9. Use of a turbomachine (200, 200a, 200b) in a carbon dioxide capture process, wherein the turbo machine comprises: a single-shaft compressor, an expander, and an electric machine having a rotor with a rotor shaft,
wherein the compressor is rotationally coupled to the rotor shaft of the electric machine, and
wherein the expander is rotationally coupled to the compressor by means of an overrunning clutch.

10. A plant (100) for carbon dioxide capture, configured to provide a carbon dioxide enriched gas stream and a carbon dioxide depleted gas stream, the plant comprising a turbomachine (200, 200a, 200b), wherein the turbo machine comprises: a single-shaft compressor, an expander, and an electric machine having a rotor with a rotor shaft,
wherein the plant is configured to compress an input gas stream by means of the compressor for further use, in particular for the carbon dioxide capture,
wherein the plant is configured to expand the carbon dioxide depleted gas stream by means of the expander,
wherein the compressor is rotationally coupled to the rotor shaft of the electric machine, and
wherein the expander is rotationally coupled to the compressor by means of an overrunning clutch.

11. The plant (100) of claim 10, wherein the overrunning clutch is arranged such that it engages and transmits torque when the expander as driving component rotates faster than the compressor as driven component.

12. The plant (100) of claim 10 or 11, configured to recover energy from the carbon dioxide depleted stream by means of the expander and/or to at least partially drive the compressor by means of the expander.

13. The plant (100) of any one of the claims 10 to 12, wherein the rotor shaft of the electric machine extends to two sides of the electric machine,
wherein the compressor is rotationally coupled to the rotor shaft at a first one of the two sides of the electric machine, and
wherein the expander is rotationally coupled to the rotor shaft at a second one of the two sides of the electric machine by means of the overrunning clutch.

14. The plant (100) of any one of claims 10 to 13, wherein the compressor comprises a compressor shaft, on which a compressor impeller is mounted, wherein the compressor shaft extends to two sides of the compressor,
wherein the expander is coupled to the compressor by means of the overrunning clutch.
